# EUROPÄISCHE PATENTSCHRIFT

(11) **EP 3 527 709 B1**
(45) Veröffentlichungstag und Bekanntmachung des Hinweises auf die Patenterteilung: **27.01.2021**
(21) Anmeldenummer: 19154803.1
(22) Anmeldetag: 31.01.2019
(51) Int. Cl.: D06F 35/00, C08J 5/00, B32B 27/32, C08L 23/12, A47L 15/42, D06F 39/02, D06F 37/26, B29C 48/18, B29C 45/16

(54) **BAUTEIL FÜR EIN GERÄT ZUM BEHANDELN VON WÄSCHE ODER GESCHIRR SOWIE VERFAHREN ZUM HERSTELLEN EINES SOLCHEN BAUTEILS**
COMPONENT FOR A DEVICE FOR TREATING LAUNDRY OR DISHES AND METHOD FOR PRODUCING SUCH A COMPONENT
COMPOSANT POUR LAVE-LINGE OU POUR UN LAVE-VAISSELLE AINSI QUE PROCÉDÉ DE FABRICATION D'UN TEL COMPOSANT

(30) Priorität: 20.02.2018 DE 102018202534
(43) Veröffentlichungstag der Anmeldung: 21.08.2019
(73) Patentinhaber: BSH Hausgeräte GmbH, 81739 München (DE)
(72) Erfinder: Bischoff, Reinhard, 16547 Birkenwerder (DE)

(56) Entgegenhaltungen:
- WO-A2-2010/010114
- CN-A- 101 629 375
- DE-A1-102015 206 312
- JP-A- H02 215 499

## Beschreibung

Die Erfindung betrifft ein Bauteil für ein Gerät zum Behandeln von Wäsche oder Geschirr, wobei das Bauteil in einem Betrieb des Geräts mit Feuchtigkeit beaufschlagt wird, wobei wenigstens eine Oberfläche des Bauteils zumindest teilweise aus einem Verbundwerkstoff hergestellt ist und wobei der Verbundwerkstoff Polypropylen und Polytetrafluorethylen enthält. Zudem betrifft die Erfindung ein Verfahren zum Herstellen eines Bauteils für ein Gerät zum Behandeln von Wäsche oder Geschirr, wobei das Bauteil in einem Betrieb des Geräts mit Feuchtigkeit beaufschlagt wird.

Geräte zum Behandeln von Wäsche oder Geschirr sind in vielfältigen Ausgestaltungen bekannt. Diesen Geräten ist gemeinsam, dass manche Bauteile der Geräte während eines Betriebs der Geräte mit Feuchtigkeit beaufschlagt werden. Dadurch können Beläge an nassen bzw. feuchten und wenig belüfteten Oberflächenbereichen der Bauteile entstehen, insbesondere dort, wo sich beispielsweise Wasch- oder Spülmittelreste oder andere organische Verschmutzungen an den Bauteilen ablagern und anhaften. Solche Belege können beispielsweise einen sogenannten Biofilm ausbilden. Belege, anhaftende Verschmutzungen oder Biofilme gilt es weitestgehend zu vermeiden.

Grundsätzlich ist es bekannt, Polytetrafluorethylen als Oberflächenbeschichtung von Bauteilen, die in Haushaltsgeräten eingesetzt werden, zu nutzen. Beispielsweise ist aus DE 10 2012 222 710 A1 bekannt, Oberflächen von Kühlschränken mit Polytetrafluorethylen (PTFE) zu beschichten, um eine hydrophobe Oberfläche zu schaffen, an der Wassertropfen leicht abperlen und Verschmutzungen sehr leicht weggespült werden können. Nachteilig an solchen Beschichtungen ist es, dass diese Beschichtungen durch die Oberflächenreinigung beschädigt oder gar abgetragen werden können. Somit hängt die Wirksamkeit der Oberflächenbeschichtung von der Reinigungsart und -häufigkeit stark ab. Dies gilt insbesondere für wasserführende Haushaltsgeräte, wie eine Wäschebehandlungsmaschine oder eine Geschirrspülmaschine, bei der die zu reinigenden Oberflächen betriebsbedingt mit regelmäßig mit Wasser oder Reinigungsflüssigkeit benetzt werden.

JP H02 215 499 A offenbart ein Bauteil der eingangs genannten Art. WO 2010/010 114 A2 und CN 101 629 375 A offenbaren jeweils einen Werkstoff zur Herstellung eines Bauteils für ein Gerät zum Behandeln von Wäsche oder Geschirr, der entweder Polypropylen oder Polytetrafluorethylen enthält. Ferner offenbart DE 102015 206 312 A1 eine Abführleitung aus Kunststoff eines Wäschepflegegeräts, wobei der Kunststoff aus Polypropolen, Polytetrafluorethen oder Mischungen davon bestehen kann.

Eine Aufgabe der Erfindung ist es, eine Anhaftung von Wasch- oder Spülmittelresten oder anderen organischen Verschmutzungen an einem Bauteil eines Geräts zum Behandeln von Wäsche oder Geschirr weitestgehend zu reduzieren. Darüber hinaus soll die reduzierte Anhaftung von Verschmutzungen über eine lange Lebensdauer des Bauteils bereitgestellt werden und die Wirksamkeit über eine lange Zeit vorhalten.

Diese Aufgabe wird durch die unabhängigen Patentansprüche gelöst. Vorteilhafte Ausgestaltungen sind in der nachfolgenden Beschreibung, den abhängigen Patentansprüchen und der Figur wiedergegeben, wobei diese Ausgestaltungen jeweils für sich genommen oder in verschiedener Kombination von wenigstens zwei dieser Ausgestaltungen miteinander einen weiterbildenden, insbesondere auch bevorzugten oder vorteilhaften, Aspekt der Erfindung darstellen können. Ausgestaltungen des Bauteils können dabei Ausgestaltungen des Geräts bzw. des Verfahrens entsprechen, und umgekehrt, selbst wenn im Folgenden hierauf im Einzelfall nicht explizit hingewiesen wird.

Bei einem erfindungsgemäßen Bauteil für ein Gerät zum Behandeln von Wäsche oder Geschirr, das in einem Betrieb des Geräts mit Feuchtigkeit beaufschlagt wird, ist wenigstens eine Oberfläche des Bauteils zumindest teilweise aus einem Verbundwerkstoff hergestellt, wobei der Verbundwerkstoff Polypropylen und Polytetrafluorethylen enthält und wobei ein Anteil des Polytetrafluorethylens in dem Verbundwerkstoff größer als oder gleich 15 % ist und wobei ein Anteil des Polypropylens in dem Verbundwerkstoff (3) größer als oder gleich 50 % ist.

Der erfindungsgemäße Verbundwerkstoff weist aufgrund des darin enthaltenen Polytetrafluorethylens eine deutlich geringere Oberflächenspannung als ein herkömmlicher Werkstoff auf, der kein Polytetrafluorethylen enthält. Hierdurch werden die Haftkräfte zwischen der erfindungsgemäßen Oberfläche des Bauteils einerseits und Wasch- oder Spülmittelresten oder anderen organischen Verschmutzungen andererseits stark reduziert. Dadurch können die an der Oberfläche des Bauteils anhaftenden Wasch- oder Spülmittelreste oder die anderen organischen Verschmutzungen leichter von der Oberfläche abgespült werden, beispielsweise automatisch während des laufenden oder des nachfolgenden Betriebs des Geräts. Aufgrund der Beseitigung von Ablagerungen aus Wasch- oder Spülmittelresten oder anderen organischen Verschmutzungen an der Oberfläche des Bauteils kann eine Biofilmbildung oder sonstige Belege an der Oberfläche weitestgehend unterdrückt bzw. vollständig unterbunden werden. Besonders von Vorteil ist, dass das Bauteil aus einem Verbundwerkstoff besteht, bei dem im Gegensatz zu einer Oberflächenbeschichtung das Polytetrafluorethylen in dem Werkstoff eingelagert ist. Somit ist auch bei einer Beschädigung einem Abtrag der Oberfläche des Bauteils sichergestellt, dass die beschädigte oder verbliebene Oberfläche Polytetrafluorethylen aufweist und nicht wie bei einer Beschichtung entfernt worden ist. Durch den Polytetrafluorethylen enthaltenden Verbundwerkstoff kann die Anhaftungen von Verschmutzungen über einen langen Zeitraum bzw. über die gesamte Bauteillebensdauer sichergestellt werden.

Vorzugsweise ist die gesamte im Betrieb des Geräts mit Feuchtigkeit bzw. Nässe beaufschlagte Oberfläche des Bauteils aus dem Verbundwerkstoff hergestellt. Es können auch zwei oder mehrere Oberflächen des Bauteils aus dem Verbundwerkstoff hergestellt sein. Das Bauteil kann teilweise oder vollständig aus dem Verbundwerkstoff hergestellt sein.

Für den Fall, dass das Bauteil nur teilweise aus dem Verbundwerkstoff hergestellt ist, so ist zumindest der Verbundwerkstoff in einer die Oberfläche des Bauteils bildende Schicht vorgesehen, welche bevorzugt eine Schichtdicke hat, die leichten Beschädigungen oder betriebsbedingen Abnutzungen standhalten, d.h. die Schicht des Verbundwerkstoffs hat eine Dicke die größer ist als Tiefe der üblicherweise an dem Bauteil durch den betriebsbedingten Gebrauch entstehenden Kratz- oder Gebrauchsspuren. Bevorzugt ist die Dicke der Schicht größer gleich 1 mm.

Ein erfindungsgemäßes Bauteil kann an verschiedenen Stellen in dem Gerät eingesetzt werden, an denen aufgrund von Ablagerungen von Wasch- oder Spülmittelresten oder anderen organischen Verschmutzungen an der Oberfläche eines herkömmlichen Bauteils mit einer Belagbildung oder der Bildung eines Biofilms zu rechnen ist. Beispielsweise kann das Bauteil als Einspülschalengehäuse einer Waschmaschine oder eines Waschtrockners ausgebildet sein, da es von herkömmlichen Einspülschalengehäusen bekannt ist, dass sich im Bereich einer Dusche an dem Einspülschalengehäuse Belege ausbilden können. Alternativ kann das Bauteil lediglich einen Abschnitt des Einspülschalengehäuses bilden. Alternativ kann das Bauteil als axiale Rückwand eines Laugenbehälters einer Waschmaschine, eines Waschtrockners oder eines Wäschetrockners ausgebildet sein, da es bekannt ist, dass sich dort bei einer herkömmlichen axialen Rückwand Belege oder Biofilm bilden können. Alternativ kann das Bauteil als Abschnitt einer Bodengruppe eines Waschtrockners, eines Wäschetrockners oder eines Trockenschranks im Bereich einer Kondensatsammelwanne ausgebildet sein, da es bekannt ist, dass sich dort bei einer herkömmlichen Bodengruppe Belege oder Biofilm bilden können. Alternativ kann das Bauteil zumindest als innenliegendes Teil einer Pumpe, eines Schlauchs, eines Flüssigkeitsbehälters oder dergleichen einer Waschmaschine, eines Waschtrockners, eines Wäschetrockners, eines Trockenschranks oder eines Geschirrspülers ausgebildet sein, da es bekannt ist, dass sich dort herkömmlich ein Belag oder ein Biofilm bilden kann.

Bei einem erfindungsgemäßen Anteil des Polytetrafluorethylens in dem Verbundwerkstoff größer als oder gleich 15 % ist die Oberflächenspannung der aus dem Verbundwerkstoff hergestellten Oberfläche des Bauteils derart reduziert, dass ein Anhaften von Wasch- oder Spülmittelresten oder anderen organischen Verschmutzungen an der Oberfläche weitestgehend verhindert und ein Abspülen von entsprechenden Ablagerungen an der Oberfläche stark erleichtert wird.

Erfindungsgemäß ist ein Anteil des Polypropylens in dem Verbundwerkstoff größer als oder gleich 50 %. Auch hierdurch kann gewährleistet werden, dass bei der Herstellung des Bauteils etwa dieselben Schwindungswerte gegeben sind, wie bei einem herkömmlichen Bauteil, so dass zur Herstellung des Bauteils gemäß der vorliegenden Anmeldung dieselben Herstellungswerkzeuge eingesetzt werden können. Dadurch werden die Herstellungskosten nicht unnötig erhöht.

Eine vorteilhafte Ausgestaltung sieht vor, dass der Verbundwerkstoff wenigstens einen Füllstoff enthält. Der Füllstoff kann zudem eine Verstärkungsfunktion aufweisen. Der Füllstoff kann beispielsweise Talkum sein. Ein Anteil des Füllstoffs kann beispielsweise etwa 20 % betragen. Vorzugsweise sind die Anteile des Füllstoffs und des Polytetrafluorethylens derart gewählt, dass bei der Herstellung des Bauteils etwa dieselben Schwindungswerte gegeben sind, wie bei einem herkömmlichen Bauteil, so dass zur Herstellung des Bauteils gemäß der vorliegenden Anmeldung dieselben Herstellungswerkzeuge eingesetzt werden können. Dadurch werden die Herstellungskosten nicht unnötig erhöht. Der Werkstoff kann auch ausschließlich aus dem Polypropylen, dem Füllstoff und dem Polytetrafluorethylen gebildet sein.

Gemäß einer weiteren vorteilhaften Ausgestaltung ist das Bauteil vollständig aus dem Verbundwerkstoff hergestellt. Dies macht beispielsweise eine einfache Herstellung des Bauteils unter Verwendung eines Spritzgießverfahrens oder eines Extrusionsverfahrens möglich.

Ein erfindungsgemäßes Gerät zum Behandeln von Wäsche oder Geschirr weist wenigstens ein Bauteil nach einer der vorgenannten Ausgestaltungen oder einer beliebigen Kombination von wenigstens zwei dieser Ausgestaltungen miteinander auf.

Mit dem Gerät sind die oben mit Bezug auf das Bauteil genannten Vorteile entsprechend verbunden. Das Gerät zum Behandeln von Wäsche kann beispielsweise eine Waschmaschine, ein Waschtrockner, ein Wäschetrockner oder ein Trockenschrank sein. Das Gerät zum Behandeln von Geschirr kann beispielsweise ein Geschirrspüler sein.

Nach einem erfindungsgemäßen Verfahren zum Herstellen eines Bauteils für ein Gerät zum Behandeln von Wäsche oder Geschirr, das in einem Betrieb des Geräts mit Feuchtigkeit beaufschlagt wird, wird wenigstens eine Oberfläche des Bauteils derart zumindest teilweise aus einem Polypropylen und Polytetrafluorethylen enthaltenden Verbundwerkstoff hergestellt, dass ein Anteil des Polytetrafluorethylens in dem Verbundwerkstoff größer als oder gleich 15 % ist und dass ein Anteil des Polypropylens in dem Verbundwerkstoff (3) größer als oder gleich 50 % ist.

Mit dem Verfahren sind die oben mit Bezug auf das Bauteil genannten Vorteile entsprechend verbunden. Insbesondere kann das Bauteil gemäß einer der oben genannten Ausgestaltungen oder einer beliebigen Kombination von wenigstens zwei dieser Ausgestaltungen miteinander mittels des erfindungsgemäßen Verfahrens hergestellt werden. Der Verbundwerkstoff kann zusätzlich einen Füllstoff enthalten.

Gemäß einer vorteilhaften Ausgestaltung wird das Bauteil unter Verwendung eines Mehrkomponenten-Spritzgießverfahrens hergestellt, wobei der Verbundwerkstoff als eine Spritzgießkomponente verwendet wird, so dass die Oberfläche des Bauteils zumindest teilweise aus dem Verbundwerkstoff hergestellt wird. Eine während des Mehrkomponenten-Spritzgießverfahrens eingesetzte weitere Spritzgießkomponente kann zumindest teilweise mit dem als Spritzgießkomponente gegebenen Verbundwerkstoff umspritzt werden, um die erfindungsgemäße Oberfläche des Bauteils auszubilden. Durch das Mehrkomponenten-Spritzgießverfahren wird vorteilhaft erreicht, dass eine dauerhafte Verbindung zwischen den einzelnen Spritzgießkomponenten bereitgestellt wird. Somit kann die den Verbundwerkstoff enthaltende Oberfläche des Bauteils länger Beschädigungen standhalten, wodurch die reduzierte Anhaftung von Verschmutzungen über einen noch längeren Zeitraum ermöglicht wird. Darüber hinaus können bei einem solchen Mehrkomponenten-Spritzgießverfahrens Bauteile mit einer äußeren Schichtdicke hergestellt werden, die leichten Beschädigungen standhalten können.

Nach einer weiteren vorteilhaften Ausgestaltung wird das Bauteil unter Verwendung eines Mehrkomponenten-Extrusionsverfahrens hergestellt, wobei der Verbundwerkstoff als eine Extrusionskomponente verwendet wird, so dass die Oberfläche des Bauteils zumindest teilweise aus dem Verbundwerkstoff hergestellt wird. Eine während des Mehrkomponenten-Extrusionsverfahrens eingesetzte weitere Extrusionskomponente kann zumindest teilweise mit einer Schicht aus dem als Extrusionskomponente gegebenen Verbundwerkstoff versehen werden, um die erfindungsgemäße Oberfläche des Bauteils auszubilden. Hierbei kann beispielsweise ein Schlauch oder ein Flüssigkeitsbehälter hergestellt werden, dessen gesamte Innenfläche als erfindungsgemäße Oberfläche ausgebildet ist.

Im Folgenden wird die Erfindung unter Bezugnahme auf die anliegende Figur anhand einer bevorzugten Ausführungsform exemplarisch erläutert. Es zeigt:

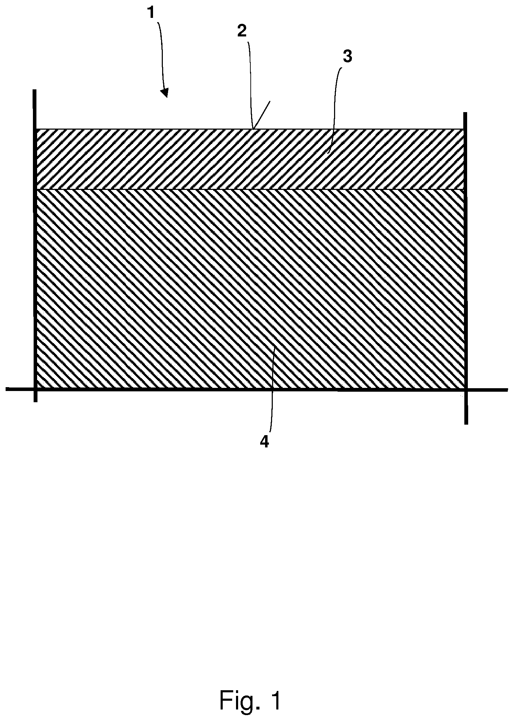

- Fig. 1: eine schematische Darstellung eines Abschnitts eines Ausführungsbeispiels für ein erfindungsgemäßes Bauteil.

Fig. 1 zeigt eine schematische Darstellung eines Abschnitts eines Ausführungsbeispiels für ein erfindungsgemäßes Bauteil 1 für ein nicht gezeigtes Gerät zum Behandeln von Wäsche oder Geschirr. Das Bauteil 1 wird in einem Betrieb des Geräts mit Feuchtigkeit beaufschlagt.

Das Bauteil 1 weist wenigstens eine Oberfläche 2 auf, die zumindest teilweise aus einem Verbundwerkstoff 3 hergestellt ist, wobei der Verbundwerkstoff Polypropylen und Polytetrafluorethylen enthält. Ein Anteil des Polytetrafluorethylens in dem Verbundwerkstoff kann größer als oder gleich 15 % sein. Zudem kann der Verbundwerkstoff 3 wenigstens einen Füllstoff enthalten, beispielsweise Talkum. Ein Anteil des Polypropylens in dem Verbundwerkstoff 3 kann größer als oder gleich 50 % sein. Der Verbundwerkstoff 3 ist als äußere Schicht an einem Grundwerkstoff 4 angeordnet und stoffschlüssig mit diesem verbunden. Alternativ kann das Bauteil 1 vollständig aus dem Verbundwerkstoff 3 hergestellt sein.

Das Bauteil 1 kann unter Verwendung eines Mehrkomponenten-Spritzgießverfahrens hergestellt sein, wobei der Verbundwerkstoff 3 als eine Spritzgießkomponente verwendet wird, so dass die Oberfläche 2 des Bauteils 1 zumindest teilweise aus dem Verbundwerkstoff 3 hergestellt wird. Alternativ kann das Bauteil 1 unter Verwendung eines Mehrkomponenten-Extrusionsverfahrens hergestellt sein, wobei der Verbundwerkstoff 3 als eine Extrusionskomponente verwendet wird, so dass die Oberfläche 2 des Bauteils 1 zumindest teilweise aus dem Verbundwerkstoff 3 hergestellt wird. Die Dicke der Schicht des Verbundwerkstoffs 3 ist in diesem Ausführungsbeispiel 1 mm. Abhängig von den Einsatzbedingungen des Bauteils kann auch eine größere Schichtdicke gewählt werden, um den betriebsüblichen Abnutzungen standzuhalten.

### Bezugszeichenliste:

- 1: Bauteil
- 2: Oberfläche
- 3: Verbundwerkstoff
- 4: Grundwerkstoff

## Patentansprüche

1. Bauteil (1) für ein Gerät zum Behandeln von Wäsche oder Geschirr, wobei das Bauteil (1) in einem Betrieb des Geräts mit Feuchtigkeit beaufschlagt wird, wobei wenigstens eine Oberfläche (2) des Bauteils (1) zumindest teilweise aus einem Verbundwerkstoff (3) hergestellt ist, wobei der Verbundwerkstoff (3) Polypropylen und Polytetrafluorethylen enthält, **dadurch gekennzeichnet, dass** ein Anteil des Polytetrafluorethylens in dem Verbundwerkstoff (3) größer als oder gleich 15 % ist und dass ein Anteil des Polypropylens in dem Verbundwerkstoff (3) größer als oder gleich 50 % ist.

2. Bauteil (1) nach Anspruch 1, **dadurch gekennzeichnet, dass** der Verbundwerkstoff (3) wenigstens einen Füllstoff enthält.

3. Bauteil (1) nach Anspruch 1 oder 2, **dadurch gekennzeichnet, dass** das Bauteil (1) vollständig aus dem Verbundwerkstoff (3) hergestellt ist.

4. Bauteil (1) nach Anspruch 1 oder 2, **dadurch gekennzeichnet, dass** das Bauteil (1) teilweise aus dem Verbundwerkstoff (3) hergestellt ist und dass der Verbundwerkstoff (3) in einer die Oberfläche (2) des Bauteils (1) bildende Schicht ausgebildet ist.

5. Bauteil (1) nach Anspruch 4, **dadurch gekennzeichnet, dass** die Schicht des Verbundwerkstoffs (3) eine Dicke größer gleich 1 mm hat.

6. Gerät zum Behandeln von Wäsche oder Geschirr, **gekennzeichnet durch** wenigstens ein Bauteil (1) nach einem der Ansprüche 1 bis 5.

7. Verfahren zum Herstellen eines Bauteils (1) für ein Gerät zum Behandeln von Wäsche oder Geschirr, wobei das Bauteil (1) in einem Betrieb des Geräts mit Feuchtigkeit beaufschlagt wird, **dadurch gekennzeichnet, dass** wenigstens eine Oberfläche (2) des Bauteils (1) derart zumindest teilweise aus einem Polypropylen und Polytetrafluorethylen enthaltenden Verbundwerkstoff (3) hergestellt wird, dass ein Anteil des Polytetrafluorethylens in dem Verbundwerkstoff (3) größer als oder gleich 15 % ist und dass ein Anteil des Polypropylens in dem Verbundwerkstoff (3) größer als oder gleich 50 % ist.

8. Verfahren nach Anspruch 7, **dadurch gekennzeichnet, dass** das Bauteil (1) unter Verwendung eines Mehrkomponenten-Spritzgießverfahrens hergestellt wird, wobei der Verbundwerkstoff (3) als eine Spritzgießkomponente verwendet wird, so dass die Oberfläche (2) des Bauteils (1) zumindest teilweise aus dem Verbundwerkstoff (3) hergestellt wird.

9. Verfahren nach Anspruch 7, **dadurch gekennzeichnet, dass** das Bauteil (1) unter Verwendung eines Mehrkomponenten-Extrusionsverfahrens hergestellt wird, wobei der Verbundwerkstoff (3) als eine Extrusionskomponente verwendet wird, so dass die Oberfläche (2) des Bauteils (1) zumindest teilweise aus dem Verbundwerkstoff (3) hergestellt wird.

## Claims

1. Component (1) for an appliance for the treatment of laundry or dishes, wherein moisture is applied to the component (1) during operation of the appliance, wherein at least one surface (2) of the component (1) is at least partially produced from a composite material (3), wherein the composite material (3) contains polypropylene and polytetrafluorethylene, **characterised in that** a proportion of the polytetrafluorethylene in the composite material (3) is greater than or equal to 15 % and that a proportion of the polypropylene in the composite material (3) is greater than or equal to 50 %.

2. Component (1) according to claim 1, **characterised in that** the composite material (3) contains at least one filler.

3. Component (1) according to claim 1 or 2, **characterised in that** the component (1) is entirely produced from the composite material (3).

4. Component (1) according to claim 1 or 2, **characterised in that** the component (1) is partially produced from the composite material (3) and that the composite material (3) is embodied in a layer which forms the surface (2) of the component (1).

5. Component (1) according to claim 4, **characterised in that** the layer of the composite material (3) has a thickness greater than or equal to 1 mm.

6. Appliance for the treatment of laundry or dishes, **characterised by** at least one component (1) according to one of the claims 1 to 5.

7. Method for producing a component (1) for an appliance for the treatment of laundry or dishes, wherein moisture is applied to the component (1) during operation of the appliance, **characterised in that** at least one surface (2) of the component (1) is at least partially produced from a composite material (3) which contains polypropylene and polytetrafluorethylene, in such a way that a proportion of the polytetrafluorethylene in the composite material (3) is greater than or equal to 15 % and that a proportion of the polypropylene in the composite material (3) is greater than or equal to 50 %.

8. Method according to claim 7, **characterised in that** the component (1) is produced using a multi-component injection moulding method, wherein the composite material (3) is used as an injection moulding component, so that the surface (2) of the component (1) is at least partially produced from the composite material (3).

9. Method according to claim 7, **characterised in that** the component (1) is produced using a multi-component extrusion method, wherein the composite material (3) is used as an extrusion component, so that the surface (2) of the component (1) is at least partially produced from the composite material (3).

## Revendications

1. Composant (1) pour un appareil destiné au traitement de linge ou de vaisselle, dans lequel le composant (1) est alimenté en humidité pendant un fonctionnement de l'appareil, dans lequel au moins une surface (2) du composant (1) est fabriquée au moins en partie à partir d'un matériau composite (3), dans lequel le matériau composite (3) contient du polypropylène et du polytétrafluoroéthylène, **caractérisé en ce qu'**une proportion du polytétrafluoroéthylène dans le matériau composite (3) est supérieure ou égale à 15% et **en ce qu'**une proportion du polypropylène dans le matériau composite (3) est supérieure ou égale à 50%.

2. Composant (1) selon la revendication 1, **caractérisé en ce que** le matériau composite (3) contient au moins une matière de remplissage.

3. Composant (1) selon la revendication 1 ou 2, **caractérisé en ce que** le composant (1) est entièrement fabriqué à partir du matériau composite (3).

4. Composant (1) selon la revendication 1 ou 2, **caractérisé en ce que** le composant (1) est fabriqué en partie à partir du matériau composite (3) et **en ce que** le matériau composite (3) est réalisé dans une couche formant la surface (2) du composant (1).

5. Composant (1) selon la revendication 4, **caractérisé en ce que** la couche du matériau composite (3) a une épaisseur supérieure ou égale à 1 mm.

6. Appareil destiné au traitement de linge ou de vaisselle, **caractérisé par** au moins un composant (1) selon l'une quelconque des revendications 1 à 5.

7. Procédé de fabrication d'un composant (1) pour un appareil destiné au traitement de linge ou de vaisselle, dans lequel le composant (1) est alimenté en humidité pendant un fonctionnement de l'appareil, **caractérisé en ce qu'**au moins une surface (2) du composant (1) est fabriquée au moins en partie à partir d'un matériau composite (3) contenant du polypropylène et du polytétrafluoroéthylène de manière à ce qu'une proportion du polytétrafluoroéthylène dans le matériau composite (3) soit supérieure ou égale à 15% et qu'une proportion du polypropylène dans le matériau composite (3) soit supérieure ou égale à 50%.

8. Procédé selon la revendication 7, **caractérisé en ce que** le composant (1) est fabriqué en utilisant un procédé de moulage par injection à plusieurs composants, dans lequel le matériau composite (3) est utilisé en tant qu'un composant de moulage par injection de sorte que la surface (2) du composant (1) est fabriquée au moins en partie à partir du matériau composite (3).

9. Procédé selon la revendication 7, **caractérisé en ce que** le composant (1) est fabriqué en utilisant un procédé d'extrusion à plusieurs composants, dans lequel le matériau composite (3) est utilisé en tant qu'un composant d'extrusion de sorte que la surface (2) du composant (1) est fabriquée au moins en partie à partir du matériau composite (3).
